# EUROPEAN PATENT APPLICATION

(11) **EP 2 475 031 A1**
(43) Date of publication of application: **11.07.2012**
(21) Application number: 11183247.3
(22) Date of filing: 29.09.2011
(51) Int. Cl.: H01M 2/30

(54) **Secondary battery and method of assembling the same**

(30) Priority: 11.01.2011 US 431516 P; 29.07.2011 US 193893
(71) Applicant: SB LiMotive Co., Ltd., Giheung-gu Yongin-si, Gyeonggi-do 449-577 (KR)
(72) Inventor: Kim, Sungbae, 449-577 Gyeonggi-do (KR); Kwak, Gunho, 449-577 Gyeonggi-do (KR)
(74) Representative: Gulde Hengelhaupt Ziebig & Schneider

(57) **Abstract**

The present invention is directed to a secondary battery comprising an electrode assembly (110), a collecting terminal (122) electrically connected to the electrode assembly, a terminal plate electrically connected to the collecting terminal, the terminal plate including a groove (123b), and a coupling terminal (124) connected to the terminal plate, wherein the coupling terminal comprises an insertion part (124a) coupled with the groove of the terminal plate. The invention further provides a method of assembling a secondary battery, the method comprising coupling a collecting terminal to an electrode assembly, coupling a terminal plate to the collecting terminal, the terminal plate including a groove, and coupling a coupling terminal to the terminal plate by sliding an insertion part of the coupling terminal into the groove of the terminal plate.

## Description

### BACKGROUND

### 1. Field

Embodiments relates to a secondary battery and a method of assembling the secondary battery.

### 2. Description of the Related Art

Secondary batteries are rechargeable unlike primary batteries. Among such secondary batteries, a low capacity battery including a battery cell in the form of a pack may be used for small portable electronic devices such as cellular phones and camcorders, and a high capacity battery including dozens of battery cells connected to one another may be used as a motor-driving power source for electric scooters, hybrid vehicles, or electric vehicles.

Secondary batteries are manufactured in various shapes such as a cylindrical shape and a prismatic shape. A secondary battery is manufactured as follows: an electrode assembly formed by disposing an insulating separator between a positive electrode plate and a negative electrode plate is placed in a case together with electrolyte, and a cap plate is disposed on the case. The electrode assembly is connected to positive and negative terminals which protrude from the cap plate and are exposed to the exterior of the electrode assembly.

### SUMMARY

An aspect of the present invention provides a secondary battery in which an electrode terminal can be securely coupled for improving coupling reliability and reducing resistance and manufacturing costs.

According to at least one of embodiments, a secondary battery comprises an electrode assembly, a collecting terminal electrically connected to the electrode assembly, a terminal plate electrically connected to the collecting terminal, the terminal plate including a groove and a coupling terminal connected to the terminal plate. The coupling terminal comprises an insertion part coupled with the groove of the terminal plate.

The groove may extend in a direction parallel to the terminal plate. The secondary battery may further comprise a collecting plate electrically connected between the collecting terminal and the electrode assembly. The coupling terminal may include a bending part, the bending part being bent at lateral sides of the terminal plate. The terminal plate may include coupling grooves at the lateral sides thereof, the bending part of the coupling terminal being coupled to the coupling grooves of the terminal plate. The coupling grooves of the terminal plate may be on opposing lateral sides of the terminal plate. The terminal plate may include a penetration hole in a center part thereof, the collecting terminal being in the penetration hole. The terminal plate may include fixing jaws on an upper side of the groove. The coupling terminal may include a fixing part on an upper side of the insertion part, a width of the fixing part being smaller than a width of the insertion part. The width of the fixing part may correspond to a distance between the fixing jaws of the terminal plate.

According to another embodiment, there is provided a method of assembling a secondary battery. The method comprises coupling a collecting terminal to an electrode assembly, coupling a terminal plate to the collecting terminal, the terminal plate including a groove, and coupling a coupling terminal to the terminal plate by sliding an insertion part of the coupling terminal into the groove of the terminal plate.

The coupling terminal may include a bending part at sides thereof, and coupling the coupling terminal may include sliding the coupling terminal into the groove of the terminal plate in a state in which a first end of the bending part is bent downwardly and a second end of the bending part extends substantially parallel with a sliding direction of the coupling terminal. Coupling the coupling terminal may further include bending the second end of the bending part to couple the second end to a second lateral side of the terminal plate when the first end of the bending part contacts a first lateral side of the terminal plate. The terminal plate may include a first coupling groove on the first lateral side thereof, and coupling the coupling terminal may include coupling the first end of the bending part with the first coupling groove. The terminal plate may include a second coupling groove on the second lateral side thereof, and coupling the coupling terminal may include coupling the second end of the bending part with the second coupling groove.

According to another embodiment, a secondary battery may include: a case in which an electrode assembly is disposed; a cap plate configured to seal the case; a collecting terminal electrically connected to the electrode assembly and protruding upward from the cap plate; a terminal plate coupled to the collecting terminal and including a horizontal slide groove; and a coupling terminal inserted in the slide groove of the terminal plate and coupled to the terminal plate.

The terminal plate may further include a fixing jaw disposed at an upper side of the slide groove to fix a vertical position of the coupling terminal.

The coupling terminal may include a bending part having front and rear ends in a direction in which the coupling terminal is inserted in the slide groove, and the front and rear ends of the bending part may be configured to be bent downward for coupling with the terminal plate.

The bending part of the coupling terminal may be coupled to coupling grooves vertically formed in lateral sides of the terminal plate.

According to another embodiment, there is provided a method of assembling a secondary battery. The method may include: coupling a terminal plate including a slide groove to a collecting terminal which is connected to an electrode assembly and protrudes upward from a cap plate; and coupling a coupling terminal to the terminal plate by inserting the coupling terminal in the slide groove of the terminal plate.

The coupling of the coupling terminal may be performed by inserting the coupling terminal in the slide groove of the terminal plate in a state where an end of a bending part is bent and the other end of the bending part is oriented forward to the slide groove.

The coupling of the coupling terminal may include bending the other end of the bending part to couple the other end to a lateral side of the terminal plate when the bent end of the bending part is brought into contact with a lateral side of the terminal plate.

### BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:

FIG. 1 is a perspective view illustrating a secondary battery according to an embodiment;

FIG. 2 is a perspective view illustrating the secondary battery and collecting terminals separated from the secondary battery according to an embodiment;

Fig. 3 is a sectional view taken along line I-I' of Fig. 1;

FIG. 4 is an enlarged view illustrating portion A of FIG. 2;

FIG. 5 is a sectional view taken along line II-II' of FIG. 1;

FIG. 6 is an enlarged perspective view illustrating an electrode terminal of the secondary battery according to an embodiment;

FIG. 7 is a perspective view illustrating a method of coupling secondary batteries with bus bars according to an embodiment;

FIG. 8A and FIG.8B are views illustrating current passages in the electrode terminal of the secondary battery according to an embodiment; and

FIGS. 9A through 9F are sequential views illustrating a method of assembling the secondary battery according to an embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the disclosure to those skilled in the art.

Hereinafter, a structure of a secondary battery will be described according to an embodiment.

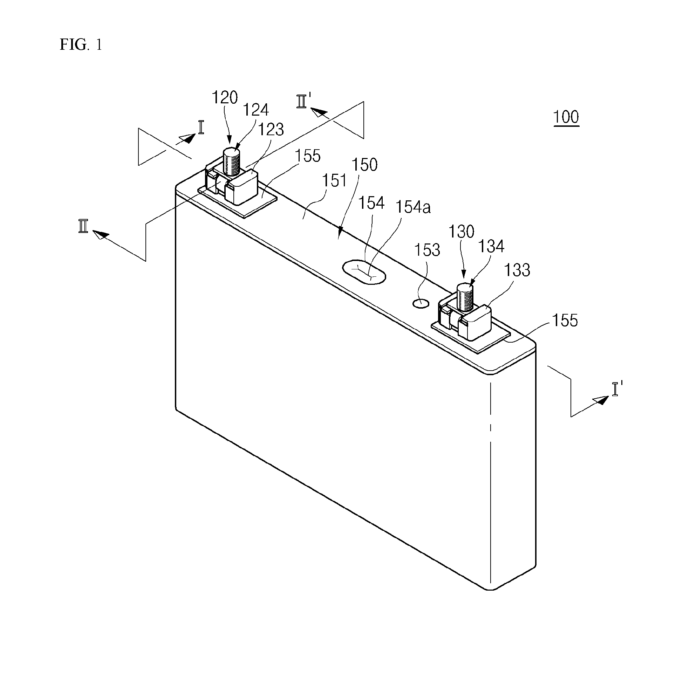

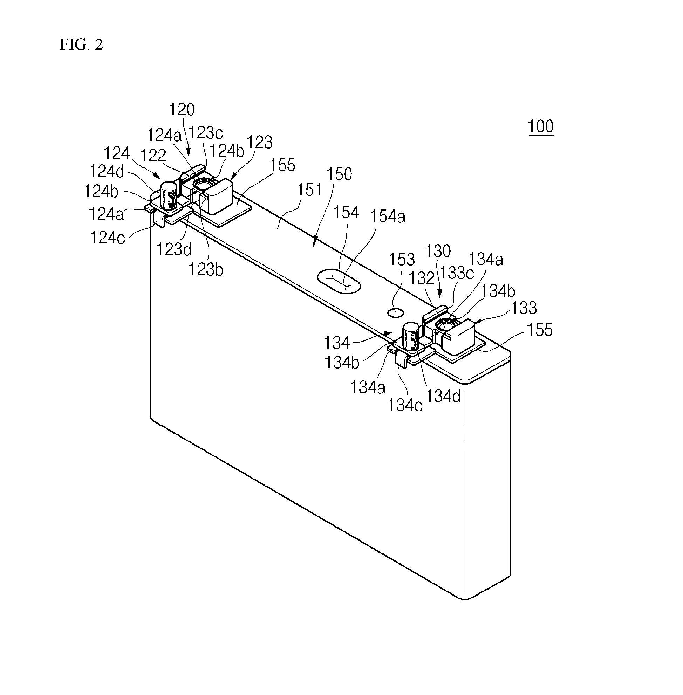

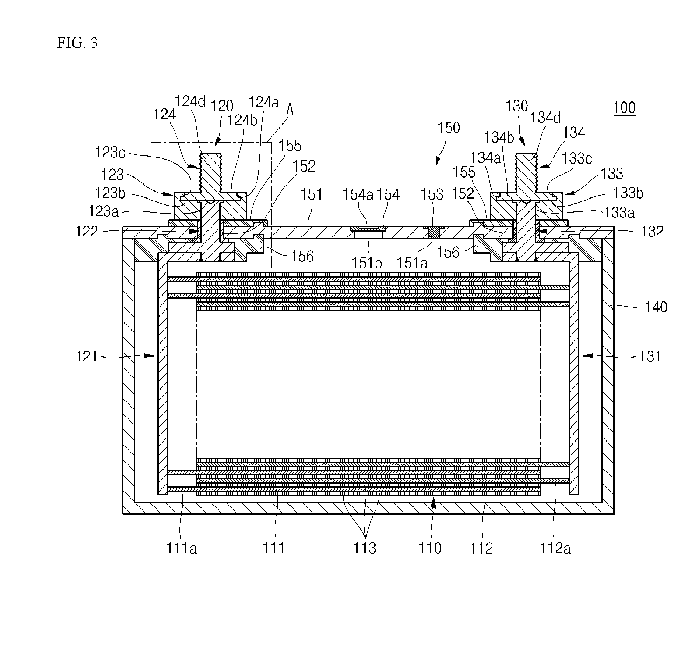

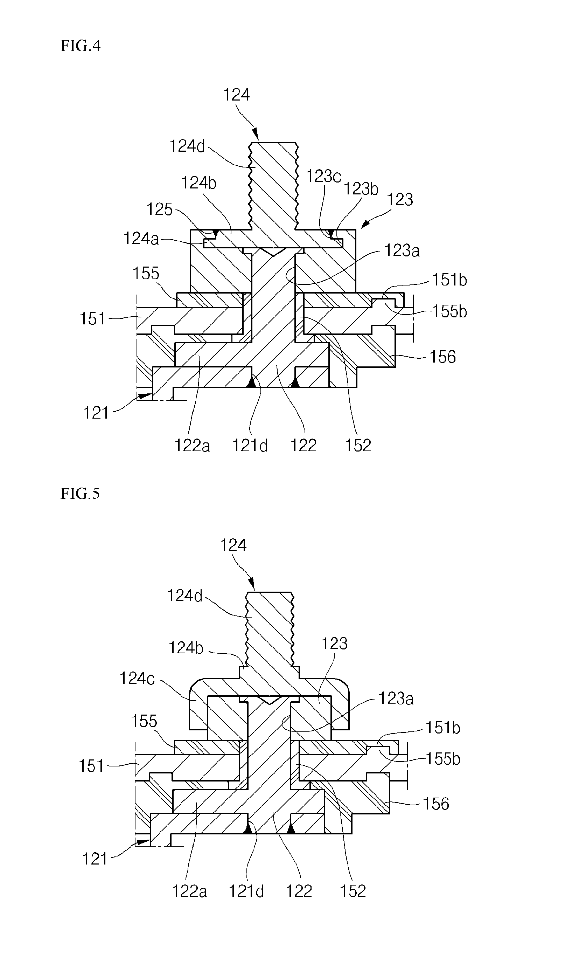

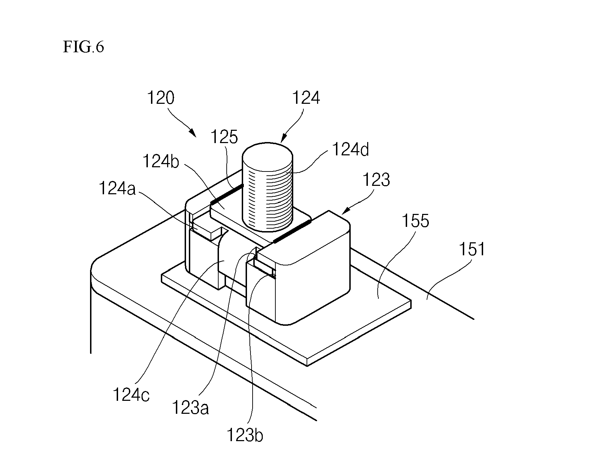

FIG. 1 is a perspective view illustrating a secondary battery according to an embodiment. FIG. 2 is a perspective view illustrating the secondary battery and collecting terminals separated from the secondary battery according to an embodiment. Fig. 3 is a sectional view taken along line I-I' of Fig. 1. FIG. 4 is an enlarged view illustrating portion A of FIG. 2. FIG. 5 is a sectional view taken along line II-II' of FIG. 1. FIG. 6 is an enlarged perspective view illustrating an electrode terminal of the secondary battery according to an embodiment.

Referring to FIGS. 1 through 6, a secondary battery 100 of the current embodiment includes an electrode assembly 110, a first terminal 120, a second terminal 130, a case 140, and a cap assembly 150.

The electrode assembly 110 is formed by winding or stacking a first electrode plate 111, a separator 113, and a second electrode plate 112, which have a thin plate or film shape. The separator 113 is disposed between the first electrode plate 111 and the second electrode plate 112. The first electrode plate 111 may function as a negative electrode, and the second electrode plate 112 may function as a positive electrode. Alternatively, the first electrode plate 111 and the second electrode plate 112 may function oppositely.

The first electrode plate 111 is formed by applying a first electrode active material such as graphite or carbon to a first electrode collector formed of metal foil such as nickel or copper foil. The first electrode plate 111 includes a first electrode non-coating portion 111a to which the first electrode active metal is not applied. The first electrode non-coating portion 111a functions as a current flow passage between the first electrode plate 111 and the outside of the first electrode plate 111. In the current embodiment, materials that can be used to form the first electrode plate 111 are not limited to the above-mentioned materials.

The second electrode plate 112 is formed by applying a second electrode active material such as a transition metal oxide to a second electrode collector formed of metal foil such as aluminum foil. The second electrode plate 112 includes a second electrode non-coating portion 112a to which the second electrode active metal is not applied. The second electrode non-coating portion 112a functions as a passage for a current between the second electrode plate 112 and the outside of the second electrode plate 112. In the current embodiment, materials that can be used to form the second electrode plate 112 are not limited to the above-mentioned materials.

The polarities of the first and second electrode plates 111 and 112 may be changed with each other.

The separator 113 may be disposed between the first electrode plate 111 and the second electrode plate 112 to prevent a short circuit and allow movement of lithium ions. The separator 113 may be formed of a poly ethylene film, a poly propylene film, or a film including poly ethylene and poly propylene. In the current embodiment, materials that can be used to form the separator 113 are not limited to the above-mentioned materials.

Both ends of the electrode assembly 110 are coupled with the first and second terminals 120 and 130 that are electrically connected respectively to the first and second electrode plates 111 and 112.

Substantially, the electrode assembly 110 is accommodated in the case 140 together with electrolyte. The electrolyte may include an organic solvent such as ethylene carbonate (EC), propylene carbonate (PC), diethyl carbonate (DEC), ethyl methyl carbonate (EMC), and dimethyl carbonate (DMC); and a lithium salt such as LiPF6 or LiBF4. The electrolyte may be liquid, solid, or gel.

The first terminal 120 is usually formed of a metal or an equivalent thereof, and is electrically connected to the first electrode plate 111. The first terminal 120 includes a first collecting plate 121, a first collecting terminal 122, a first terminal plate 123, and a first coupling terminal 124.

The first collecting plate 121 makes contact with the first electrode non-coating portion 111a protruding from an end of the electrode assembly 110. Substantially, the first collecting plate 121 is welded to the first electrode non-coating portion 111a. The first collecting plate 121 has an approximately reverse L-shape, and a terminal hole 121d is formed in the upper part of the first collecting plate 121. The first collecting terminal 122 is fitted and coupled to the terminal hole 121d. For example, the first collecting plate 121 is formed of copper or a copper alloy. However, the material of the first collecting plate 121 is not limited thereto.

The first collecting terminal 122 penetrates a cap plate 151 (described later) and protrudes upwardly by a predetermined length. The first collecting terminal 122 is electrically connected to the first collecting plate 121 at the lower side of the cap plate 151. The first collecting terminal 122 extends and protrudes upward from the cap plate 151 by a predetermined length, and along with this, the first collecting terminal 122 includes a flange 122a at a position under the cap plate 151 so that the first collecting terminal 122 cannot be separated from the cap plate 151. A part of the first collecting terminal 122 lower than the flange 122a is inserted in the terminal hole 121d of the first collecting plate 121 and is welded to the first collecting plate 121. A part of the first collecting terminal 122 higher than the flange 122a is fixed to the first terminal plate 123. For example, an upper end of the first collecting terminal 122 may be coupled to the first terminal plate 123 (described later) and be fixed by riveting. The first collecting terminal 122 is electrically insulated from the cap plate 151. For example, the first collecting terminal 122 may be formed of one of copper, copper alloy, and an equivalent thereof. However, materials that can be used to form the first collecting terminal 122 are not limited thereto.

The first terminal plate 123 includes a body part, a penetration hole 123a formed vertically in the body part, a slide groove 123b formed horizontally in the body part, and fixing jaws 123c formed at an upper side of the slide groove 123b. The first terminal plate 123 has an approximately hexahedral shape, and the penetration hole 123a is formed at a center part of the first terminal plate 123 in an approximately vertical direction. The first collecting terminal 122 is inserted through the penetration hole 123a.

The slide groove 123b is horizontally formed in an approximately upper side of the first terminal plate 123 so that the first coupling terminal 124 can be inserted in the slide groove 123b.

The fixing jaws 123c are formed on the slide groove 123b to fix the first coupling terminal 124 in a vertical direction when the first coupling terminal 124 is inserted in the slide groove 123b.

In addition, the first terminal plate 123 includes coupling grooves 123d formed in lateral sides of the first terminal plate 123 in a direction perpendicular to the slide groove 123b. A bending part 124c (described later) of the first coupling terminal 124 is coupled to the coupling grooves 123d. Therefore, when the first coupling terminal 124 is coupled to the first terminal plate 123, the vertical position of the first coupling terminal 124 is fixed.

The first terminal plate 123 may be formed of one of stainless steel, copper, copper alloy, aluminum, aluminum alloy, and an equivalent thereof. However, the current embodiment is not limited to such materials. The first terminal plate 123 and the cap plate 151 are insulated from each other.

The first collecting terminal 122 and the first terminal plate 123 are coupled and fixed to each other. In detail, the first collecting terminal 122 is inserted through the penetration hole 123a of the first terminal plate 123, and the upper end of the first collecting terminal 122 is deformed like a rivet. Therefore, the first collecting terminal 122 and the first terminal plate 123 are mechanically and electrically coupled to each other. The upper end of the first collecting terminal 122 is placed on the same plane as the slide groove 123b of the first terminal plate 123 or is placed at a position lower than the slide groove 123b. Therefore, the joining or coupling of the first terminal plate 123 and the first coupling terminal 124 is not hindered by the first collecting terminal 122.

The first coupling terminal 124 is slid into the upper side of the first terminal plate 123 and is fixed thereto. The first coupling terminal 124 includes a body part and insertion parts 124a on the lower side of the body part. The width and thickness of the insertion parts 124a correspond to those of the slide groove 123b. The insertion parts 124a are inserted into the first terminal plate 123 in a manner such that the insertion parts 124a are horizontally slid into the slide groove 123b of the first terminal plate 123.

In addition, the first coupling terminal 124 includes a fixing part 124b formed on the upper sides of the insertion parts 124a. The width of the fixing part 124b is smaller than the width of the insertion parts 124a. The width of the fixing part 124b corresponds to a distance between the fixing jaws 123c. The fixing part 124b is slid between the fixing jaws 123c, and then the vertical position of the insertion parts 124a is fixed by the fixing jaws 123c.

In addition, the first coupling terminal 124 includes the bending part 124c between the insertion parts 124a. The bending part 124c is disposed between the insertion parts 124a at front and rear sides in a direction along which the insertion parts 124a are inserted. After the first coupling terminal 124 is inserted into the slide groove 123b of the first terminal plate 123, the bending part 124c is bent downward toward the first terminal plate 123 at an angle of approximately 90 degrees. Then, in the sliding direction of the first coupling terminal 124, the front and rear sides of the first coupling terminal 124 are fixed by the bending part 124c. For example, the bending part 124c is coupled to the coupling grooves 123d formed in the first terminal plate 123. Therefore, after the bending part 124c is coupled to the coupling grooves 123d, the front and rear sides of the first coupling terminal 124 cannot be moved. That is, the horizontal position of the first coupling terminal 124 is fixed.

In addition, the first coupling terminal 124 includes a terminal part 124d protruding upward from the fixing part 124b. A screw thread may be formed on the terminal part 124d for coupling a bus bar to the terminal part 124d.

The first coupling terminal 124 may be formed of one of stainless steel, copper, copper alloy, aluminum, aluminum alloy, and an equivalent thereof. However, the current embodiment is not limited to such materials.

The second terminal 130 is usually formed of a metal or an equivalent thereof, and is electrically connected to the second electrode plate 112. The second terminal 130 includes a second collecting plate 131, a second collecting terminal 132, a second terminal plate 133, and a second coupling terminal 134. The second terminal 130 has substantially the same structure as that of the first terminal 120. Thus, a detailed description thereof will not be repeated. The second collecting plate 131 and the second collecting terminal 132 may usually be formed of one of aluminum, an aluminum alloy, and an equivalent thereof. However, the current embodiment is not limited to such materials. The second terminal plate 133 and the second coupling terminal 134 may be usually formed of one of stainless steel, aluminum, aluminum alloy, copper, copper alloy, and an equivalent thereof. However, the current embodiment is not limited thereto.

In addition, the second terminal plate 133 may be electrically connected to the cap plate 151. In this case, the case 140 and the cap plate 151 (that will be described below in detail) may have the same polarity as that (for example, positive polarity) of the second terminal 130.

The case 140 is formed of a conductive metal such as aluminum, aluminum alloy, or steel plated with nickel. The case 140 has an approximately hexahedral shape with an opening so that the electrode assembly 110, the first terminal 120, and the second terminal 130 can be inserted and placed in the case 140. FIG. 3 illustrates a state where the case 140 and the cap assembly 150 are coupled to each other, and the opening of the case 140 is not shown. However, the peripheral part of the cap assembly 150 substantially corresponds to the opening of the case 140. The inner surface of the case 140 may be treated to be electrically insulated from the electrode assembly 110, the first and second terminals 120 and 130, and the cap assembly 150.

The cap assembly 150 is coupled to the case 140. In detail, the cap assembly 150 includes the cap plate 151, sealing gaskets 152, a plug 153, a safety vent 154, first insulation members 155, and second insulation members 156. The sealing gaskets 152, the first insulation members 155, and the second insulation members 156 may be considered as elements of the first and second terminals 120 and 130.

The cap plate 151 closes the opening of the case 140. The cap plate 151 may formed of the same material as that used to form the case 140. For example, the cap plate 151 may be coupled to the case 140 by laser welding. As described above, the cap plate 151 may have the same polarity as that of the second terminal 130. In this case, the cap plate 151 and the case 140 may have the same polarity.

The sealing gaskets 152 are formed of an insulating material and are disposed between the cap plate 151 and the first and second collecting terminals 122 and 132 to seal the gaps between the cap plate 151 and the first and second collecting terminals 122 and 132. The sealing gaskets 152 prevent permeation of moisture into the secondary battery 100 or leakage of the electrolyte from the secondary battery 100.

The plug 153 may close an electrolyte injection hole 151a of the cap plate 151. The safety vent 154 may be disposed on a vent hole 151b of the cap plate 151, and a notch 154a may be formed in the safety vent 154 so that the safety vent 154 can be opened at a preset pressure.

The first insulation members 155 are disposed between the cap plate 151 and the first and second terminal plates 123 and 133. In addition, the first insulation members 155 make tight contact with the cap plate 151. Furthermore, the first insulation members 155 may make tight contact with the sealing gaskets 152. The first insulation members 155 insulate the cap plate 151 from the first and second terminal plates 123 and 133.

The second insulation members 156 are disposed between the cap plate 151 and the first and second collecting plates 121 and 131 to prevent an unnecessary short circuit. That is, the second insulation members 156 prevent a short circuit between the first collecting plate 121 and the cap plate 151 and a short circuit between the second collecting plate 131 and the cap plate 151. The second insulation members 156 are also disposed between the cap plate 151 and the first and second collecting terminals 122 and 132 so that a short circuit can be prevented between the cap plate 151 and the first and second collecting terminals 122 and 132.

As described above, according to the current embodiment, the terminals 120 and 130 of the secondary battery 100 are configured such that the vertical positions of the coupling terminals 124 and 134 relative to the terminal plates 123 and 133 can be fixed by sliding the coupling terminals 124 and 134 into the terminal plates 123 and 133 in a state where the collecting terminals 122 and 132 are fixed to the terminal plates 123 and 133 by riveting. In addition, the horizontal positions of the coupling terminals 124 and 134 can be fixed by bending the bending parts 124c and 134c. Therefore, the coupling terminals 124 and 134 can be firmly coupled to the terminal plates 123 and 133 for reliable coupling, and thus electrical resistance can also be reduced. Furthermore, since an additional welding process is not necessary, assembling may be easily carried out.

Hereinafter, current passages in electrode terminals of secondary batteries will be described according to embodiments.

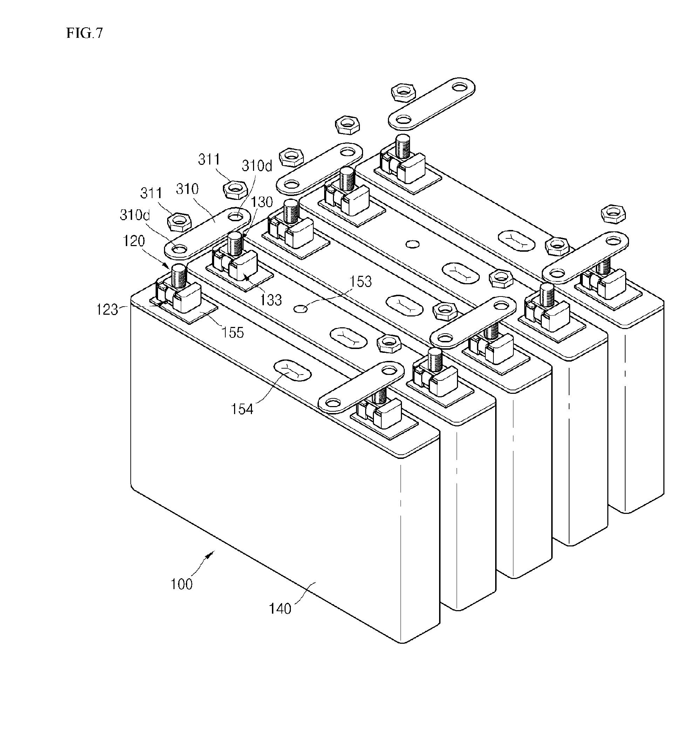

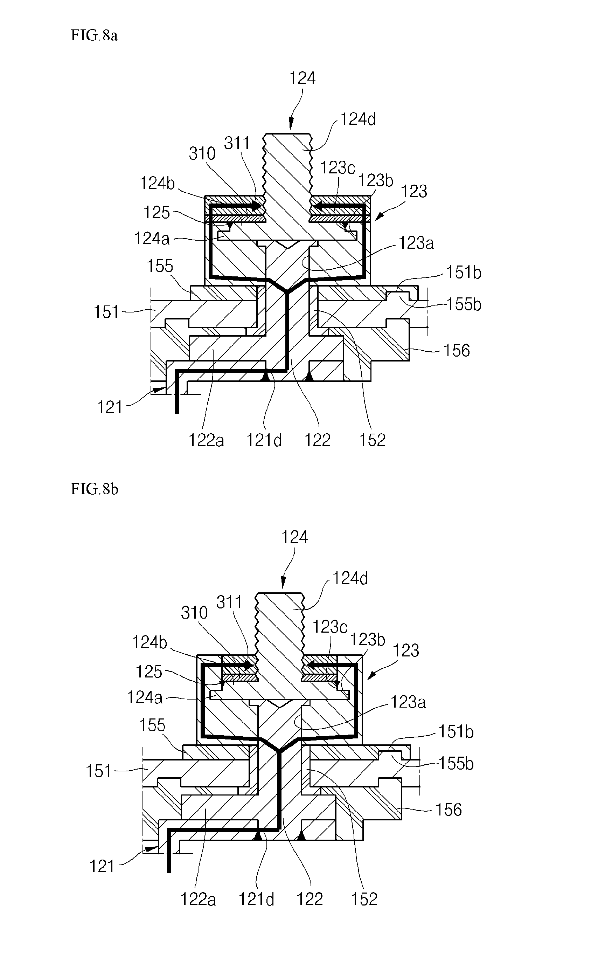

FIG. 7 is a perspective view illustrating a method of coupling secondary batteries with bus bars according to an embodiment. FIG. 8A and FIG. 8B are views illustrating current passages in the electrode terminal of the secondary battery according to an embodiment. In FIG. 8A and FIG. 8B, arrows denote passages of discharge current.

Referring to FIGS. 7 and 8A, bus bars 310 are coupled to the coupling terminals 124 to assemble a battery pack. In detail, the coupling terminals 124 are coupled to penetration holes 310d of the bus bars 310. Then, nuts 311 are coupled to portions of the coupling terminals 124 higher than the bus bars 310 so that the bus bars 310 can be brought into tight contact with terminal plates 123. Therefore, since the terminal plates 123 having a relatively large area are disposed between the collecting terminals 122 and the bus bars 310, current passages can be increased, and electric contact resistance can be reduced. Referring FIG. 8B, the bus bars 310 and the nuts 311 may be coupled to the terminal plates 123 at the inner position of the fixing jaws 123 c.

The bus bars 310 may be formed of one of stainless steel, aluminum, aluminum alloy, copper, copper alloy, and an equivalent thereof. However, the current embodiment is not limited to such materials.

As described above, the terminal plates 123 and 133 and the coupling terminals 124 and 134 may be formed of the same material or different materials. In addition, the terminal plates 123 and 133 and the bus bars 310 may be formed of the same material or different materials. In the secondary battery 100 of the current embodiment, the collecting terminals 122 and 132 are coupled to the terminal plates 123 and 133 by riveting. The coupling terminals 124 and 134 are slid into the slide grooves 123b and 133b of the terminal plates 123 and 133, and the bending parts 124c and 134c are bent. Thus, the coupling terminals 124 and 134 can be securely fixed. Furthermore, since the bus bars 310 are coupled to the coupling terminals 124 and 134 by using the nuts 311, electric resistance may not be largely increased although different materials are coupled.

Hereinafter, a method of assembling the secondary battery will be described according to an embodiment.

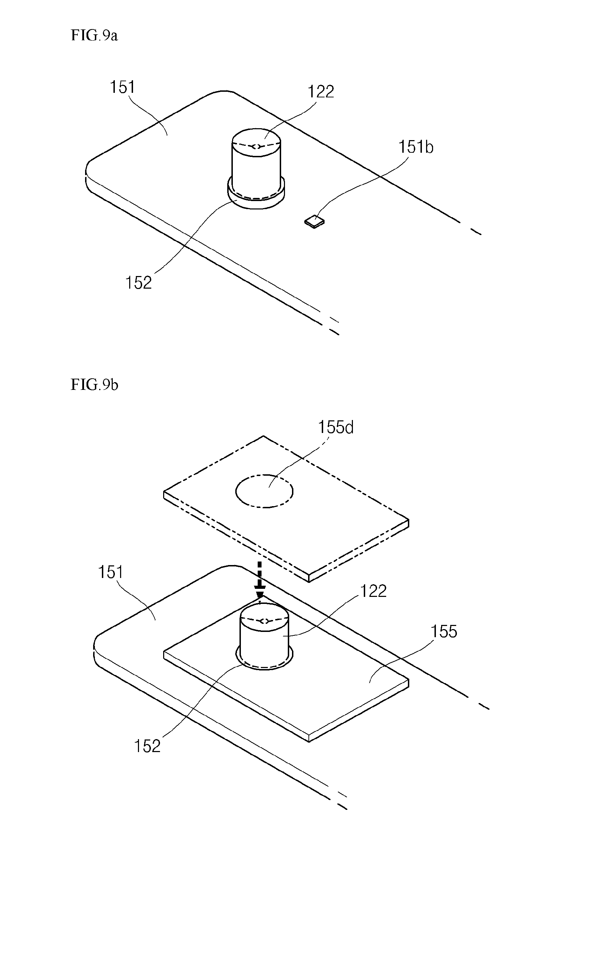

FIGS. 9A through 9F are sequential views illustrating a method of assembling the secondary battery according to an embodiment.

As shown in FIG. 9A, the first collecting terminal 122 is coupled to the cap plate 151. At this time, the first collecting terminal 122 is electrically insulated from the cap plate 151 by using the sealing gasket 152. The cap plate 151 includes a protrusion 151b that will be coupled to a hole of the first insulation member 155.

As shown in FIG. 9B, the first insulation member 155 is coupled to the first collecting terminal 122. That is, the first collecting terminal 122 is inserted through a penetration hole 155d formed through the first insulation member 155.

Then, the first insulation member 155 is placed on the cap plate 151 and coupled with the protrusion 151b. Thus, the first insulation member 155 may not be rotated on the first collecting terminal 122. At this time, the first collecting terminal 122 inserted through the first insulation member 155 protrudes upward from the first insulation member 155.

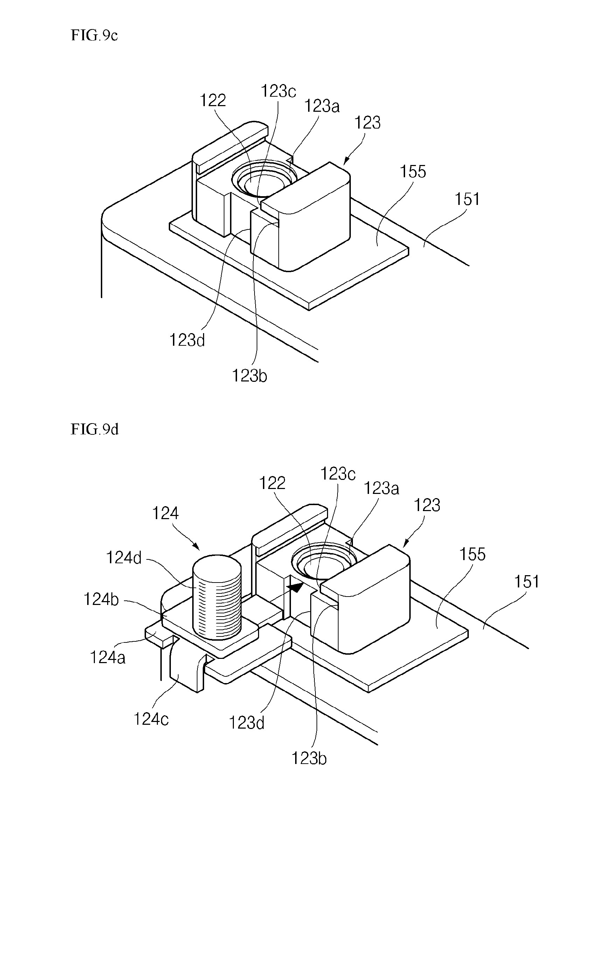

As shown in FIG. 9C, the first terminal plate 123 is coupled to the first collecting terminal 122. In detail, the first collecting terminal 122 is inserted in the penetration hole 123a formed in the center part of the first terminal plate 123. At this time, the first terminal plate 123 is brought into tight contact wit the first insulation member 155. Thus, the first terminal plate 123 is electrically insulated from the cap plate 151.

In addition, the upper end of the first collecting terminal 122 is deformed by using a riveting tool. The upper end of the first collecting terminal 122 is deformed toward a groove formed around the penetration hole 123a of the first terminal plate 123 by using the riveting tool. After the riveting process, the upper end of the first collecting terminal 122 is placed at a position lower than the slide groove 123b of the first terminal plate 123. Thus, coupling of the coupling terminal 124 is not hindered in a later process.

As shown in FIG. 9D, the first coupling terminal 124 is coupled to the first terminal plate 123. In detail, the bending part 124c of the first coupling terminal 124 may be prepared in a state where an end of the bending part 124c is bent downward at about 90 degrees and the other end of the bending part 124c is horizontal and parallel with the insertion parts 124a. In this state, the non-bent horizontal end of the bending part 124c of the first coupling terminal 124 is oriented forward to the slide groove 123b, and the insertion parts 124a of the first coupling terminal 124 are inserted and slid into the slide groove 123b of the first terminal plate 123. The first coupling terminal 124 is slid into the slide groove 123b until the rear bent end of the bending part 124c is coupled to the coupling groove 123d of the first terminal plate 123. At this time, owing to the fixing jaws 123c of the first terminal plate 123, the upper sides of the insertion parts 124a of the first coupling terminal 124 are restricted in upward movement, and thus the vertical position of the first coupling terminal 124 can be fixed.

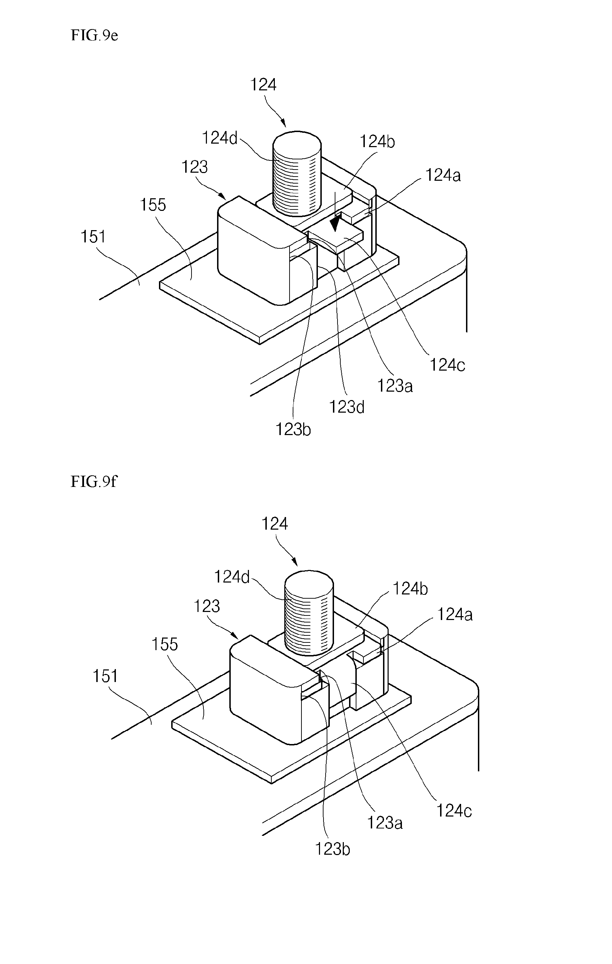

As shown in FIGS. 9E and 9F, the front horizontal end of the bending part 124c is bent at about 90 degrees by using a press. The bent end of the bending part 124c is coupled to the coupling groove 123d of the first terminal plate 123. In this way, since both front and rear ends of the bending part 124c of the first coupling terminal 124 are bent at about 90 degrees and are coupled to the first terminal plate 123, the horizontal position of the first coupling terminal 124 can be fixed.

According to the embodiments, the terminals of the secondary battery are configured such that the vertical positions of the coupling terminals can be fixed by sliding the coupling terminals into the terminal plates, and the horizontal positions of the coupling terminals can be fixed by bending the bending parts of the coupling terminals. Therefore, the coupling terminals can be firmly coupled to the terminal plates for improving coupling reliability and reducing resistance and manufacturing costs.

In addition, according to the embodiments, since the secondary battery can be securely coupled without an additional welding process, the secondary battery may be assembled more easily.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present disclosure as set forth in the following claims.

## Claims

1. A secondary battery, comprising:
an electrode assembly (110);
a collecting terminal (122) electrically connected to the electrode assembly;
a terminal plate (123) electrically connected to the collecting terminal, the terminal plate including a groove (123b); and
a coupling terminal (124) connected to the terminal plate, wherein the coupling terminal comprises an insertion part (124a) coupled with the groove of the terminal plate.

2. The secondary battery as claimed in claim 1, wherein the groove (123b) extends in a
direction parallel to the terminal plate (123).

3. The secondary battery as claimed in claim 1 or 2, further comprising a collecting plate (121) electrically connected between the collecting terminal (122) and the electrode assembly (110).

4. The secondary battery as claimed in one of the preceding claims, wherein the coupling terminal (124) includes a bending part (124c), the bending part being bent at lateral sides of the terminal plate (123).

5. The secondary battery as claimed in claim 4, wherein the terminal plate (123) includes coupling grooves (123d) at the lateral sides thereof, the bending part (124c) of the coupling terminal (124) being coupled to the coupling grooves of the terminal plate.

6. The secondary battery as claimed in claim 5, wherein the coupling grooves (123d) of the terminal plate (123) are on opposing lateral sides of the terminal plate.

7. The secondary battery as claimed in any one of the preceding claims, wherein the terminal plate (123) includes a penetration hole (123a) in a center part thereof, the collecting terminal being in the penetration hole.

8. The secondary battery as claimed in any one of the preceding claims, wherein the terminal plate (123) includes fixing jaws (123c) on an upper side of the groove.

9. The secondary battery as claimed in claim 7, wherein the coupling terminal (124) includes a fixing part (124b) on an upper side of the insertion part (124a), a width of the fixing part (124b) being smaller than a width of the insertion part.

10. The secondary battery as claimed in claim 8, wherein the width of the fixing part (124b) corresponds to a distance between the fixing jaws (123c) of the terminal plate.

11. A method of assembling a secondary battery, the method comprising:
coupling a collecting terminal (122) to an electrode assembly (110);
coupling a terminal plate (123) to the collecting terminal (122), the terminal plate including a groove (123b); and
coupling a coupling terminal (124) to the terminal plate (123) by sliding an insertion part (124a) of the coupling terminal into the groove of the terminal plate.

12. The method as claimed in claim 12, wherein:
the coupling terminal (124) includes a bending part (124c) at sides thereof, and
coupling the coupling terminal (124) includes sliding the coupling terminal into the groove (123b) of the terminal plate (123) in a state in which a first end of the bending part (124c) is bent downwardly and a second end of the bending part extends substantially parallel with a sliding direction of the coupling terminal.

13. The method as claimed in claim 13, wherein coupling the coupling terminal (124) further includes bending the second end of the bending part (124c) to couple the second end to a second lateral side of the terminal plate (123) when the first end of the bending part contacts a first lateral side of the terminal plate.

14. The method as claimed in any one of claim 12 to 14, wherein:
the terminal plate (123) includes a first coupling groove (123d) on the first lateral side thereof, and
coupling the coupling terminal (124) includes coupling the first end of the bending part (124c) with the first coupling groove.

15. The method as claimed in any one of claim 12 to 15, wherein:
the terminal plate (123) includes a second coupling groove (123d) on the second lateral side thereof, and
coupling the coupling terminal (124) includes coupling the second end of the bending part (124c) with the second coupling groove.
